# EUROPEAN PATENT APPLICATION

(11) **EP 3 090 934 A1**
(43) Date of publication of application: **09.11.2016**
(21) Application number: 15382234.1
(22) Date of filing: 06.05.2015
(51) Int. Cl.: B62M 23/02, B62M 6/60, B62M 6/45

(54) **PEDAL-ASSIST BIKE**

(71) Applicant: BHBIKES EUROPE, S.L., 01015 Vitoria-Gasteiz (Alava) (ES)
(72) Inventor: Beisteguin, Jose Luis, 01015 Vitoria (Alava) (ES)
(74) Representative: Carpintero Lopez, Francisco

(57) **Abstract**

The invention relates to a pedal-assist bike comprising a front wheel and a rear wheel, as well as an all-wheel drive system in turn comprising:
- a first electric motor acting on the front wheel,
- a second electric motor acting on the rear wheel, and
- a processor configured for independently controlling said motors in the event that the rotational speed of the wheels is different, the motors acting to equalize the rotational speed of the front and rear wheels.

## Description

### Technical Field of the Invention

The present invention relates to a pedal-assist bike, which has an application in the industry of electric bikes incorporating drive means to assist the user thereof in generating the torque necessary for movement.

### Background of the Invention

Pedal-assist bikes comprising an electric motor and at least one electric battery that allows the powering thereof are known today.

Therefore, in the electric bike sector the development of electric batteries is a very important aspect. The trend in the development of electric bikes today focuses on increasing battery capacity, providing the user with greater autonomy, or a higher thrust torque, while at the same time it is compensated with a greater energy density thereof. In other words, the bike is provided with greater autonomy without penalizing the volume that the battery takes up in the assembly of the vehicle.

In summary, the current trend is to try to reduce the weight of the components of such vehicles and at the same time increase their autonomy, for the purpose of making the use thereof more comfortable, which allows extending the operating periods of the electric motor without having to recharge it, and reducing the weight of the vehicle, which allows incorporating smaller motors and facilitating unassisted pedaling done by the user.

On the other hand, the motors of electric bikes provide increasingly higher thrust year after year, making them more uncontrollable in situations with adverse conditions. In situations of snow on the road, risk situations present given that the front wheel of the electric bike may not respond to the turning of the handlebar, but rather slides in the direction of the bike, making it uncontrollable for the user. This effect has been solved today by means of the implementation of traction control and ABS. In the bike sector, attempts to implement brakes with ABS have been unsuccessful due to the high weight added to the bike.

Taking the requirements described above into account, the present invention offers a solution in the indicated sense, i.e., it allows increasing autonomy of the bike while at the same time reducing its weight.

### Description of the Invention

The present invention relates to a pedal-assist bike comprising, like all bikes, a front wheel and a rear wheel.

According to the invention, however, the bike comprises an all-wheel drive system in turn comprising:
- a first electric motor acting on the front wheel, and
- a second electric motor acting on the rear wheel.

As is common in such vehicles, the electric motor acts directly on the wheel, without the intermediation of clutches.

Also according to the invention, the bike comprises:
- a processor configured for independently controlling said motors in the event that the rotational speed of the wheels is different, the motors acting to equalize the rotational speed of the front and rear wheels.

The processor can consist of a controlling module or element in which software controlling both motors is implemented to constantly equalize the rotational speed of the front and rear wheels.

In this sense, it is considered that the bike comprises an all-wheel drive system given that if, for example, one of the wheels slides more rapidly as the result of the presence of mud or snow on the road, by means of incorporating the two motors and management software, the system is leveled off and adapted. When any decompensation between speeds of the front wheel and the rear wheel occurs, the processor, for example, makes the motor of the slower wheel accelerate, looking to level off the speeds of both wheels; the sliding of one of them is thereby prevented, which is particularly useful in adverse weather situations.

As indicated, according to a preferred embodiment, the possibility of the processor accelerating the motor acting on the wheel having the lower rotational speed is contemplated, although the possibility of it slowing down the motor of the wheel having the higher rotational speed is also contemplated.

The first motor providing high energy efficiency at high speeds is contemplated. Likewise, the second motor providing high energy efficiency at low speeds is also contemplated.

The first motor is thereby made to be efficient energy-wise at different speeds than those at which the second motor is efficient. A system having high energy efficiency is thereby achieved because each of the motors is efficient at certain speeds.

Nevertheless, according to the invention, the first motor being the motor that provides high energy efficiency at low speeds, whereas the second motor provides high energy efficiency at high speeds, is also contemplated.

According to a preferred embodiment, the first motor has greater than 75% energy efficiency in a range of linear speed of the front wheel of 17-25 km/h, whereas the second motor has greater than 75% energy efficiency up to a linear speed of the rear wheel not greater than 17 km/h.

The possibility of an overlap area being envisaged in the bike in which both motors work in a combined manner is contemplated.

Specifically, the overlap area in which both motors work in a combined manner being comprised in the range of 15-20 km/h is contemplated.

Therefore, according to the described invention, the pedal-assist bike proposed by the invention is an advancement in electric bikes used up until now and solves in a fully satisfactory manner the drawbacks described above, in the sense that it allows having an all-wheel drive system (AWD system) applied to a pedal-assist bike, in which the implementation of software in the processor allows regulating and optimizing use of the motors, achieving the following:
- Greater autonomies by means of using each motor in the ranges of efficiency of each motor.
- Traction control in adverse weather situations (rain, snow, ice, mud) where the possibilities of any of the wheels sliding is high, which involves an increase in safety in driving the electric bike in adverse road conditions.

In the electric bike sector, weight is a less important factor, so use of a front motor allows achieving in a relatively simple manner an all-wheel drive system that allows the user to maintain control and steering of the front wheels in uncomfortable situations, giving it added safety without penalizing the weight, as occurs with the implementation of brake systems with ABS.

With respect to optimization of consumption and increase in battery autonomy, the invention achieves same by means of minimizing consumption of the system by using parts or elements having high energy efficiency. Since it is a relatively simple system, losses in the circuit, as well as consumption of the battery electronics (BMS or Battery Management System) and of the processor, are known to be minimal compared to consumption of the motor. Therefore, the solution proposed by in the invention for optimizing consumption of the system is to use two motors (a front motor and a rear motor), each of which is efficient at certain speeds. This fits perfectly with the innovation described above in relation to the all-wheel drive system likewise achieved by means of incorporating two motors, although in that case both can be efficient at the same nominal speeds.

Therefore, for the purpose of optimizing consumption, there are two motors, each of which works with high efficiency in the desired ranges of speed.

The DC electric motors of pedal-assist bikes work with greater than 75% efficiency in the ranges of speed of 15-25 km/h, showing little efficiency in lower ranges of 0-15 km/h. Since they do not have a clutch, the transmission of the driving torque to the wheels is direct, and therefore efficiency of the motor depends entirely on the driving torque curve. Therefore, the invention contemplates the rear motor providing great consumption efficiency at low speeds, whereas the front motor works at high efficiencies at high speeds, considering the previously indicated speed values.

Said overlap between the two motors is thereby achieved so that power and consumption is transferred from one motor to the other as the speed increases or decreases according to efficiency thereof, achieving energy savings and therefore greater autonomy.

Therefore, the all-wheel drive system allows the user to have front wheel manageability. To that end, it is necessary for the reading of the rotational speeds of the front and rear wheels (when the have the same tire and wheel size) to remain equal. When any decompensation between speeds occurs, the processor or controller must accelerate the motor of the slower wheel, looking to level them off. The objective consists of preventing sliding of one of the wheels.

The use of motors having different energy efficiencies in different ranges of speeds also allows that at low speeds, the motor to be used is the rear motor (efficient at low revolutions per minute) and at high speeds, the motor to be used is the front motor (efficient at high revolutions per minute). This overlap of the motor curves must compensate for the added weight and consumption due to the additional weight of a motor.

### Description of the Drawings

To complement the description that is being made and for the purpose of aiding to better understand the features of the invention according to a preferred practical embodiment thereof, a set of drawings is attached as an integral part of said description in which the following has been depicted with an illustrative and non-limiting character.

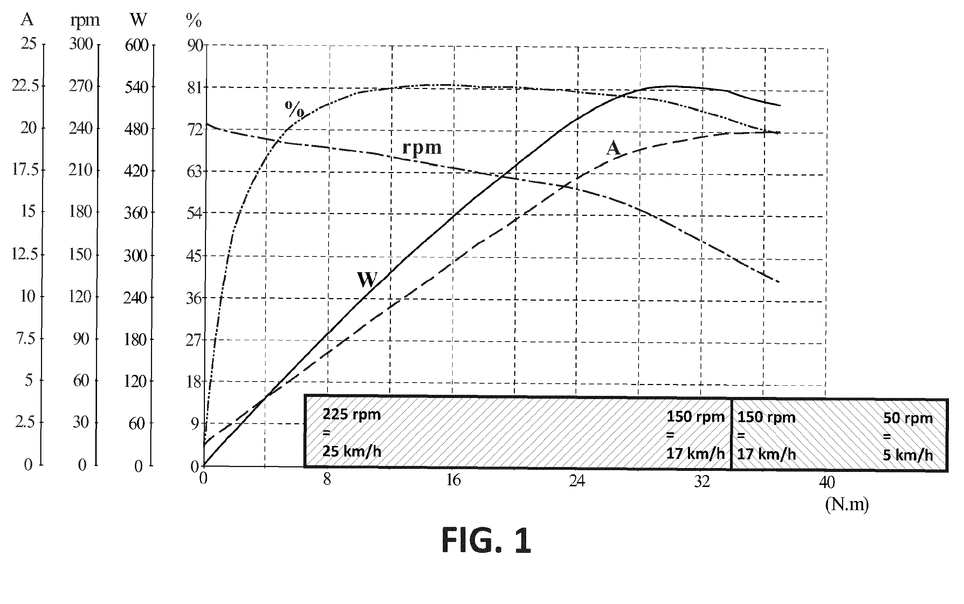

Figure 1 shows a graph which shows the efficiency curve of the front and rear motors.

### Preferred Embodiment of the Invention

In view of the described drawings, it can be seen how in one of the possible embodiments of the invention the bike proposed by the invention comprises an all-wheel drive system in turn comprising:
- a first electric motor acting on the front wheel,
- a second electric motor acting on the rear wheel, and
- a processor configured for independently controlling said motors in the event that the rotational speed of the wheels is different, the motors acting to equalize the rotational speed of the front and rear wheels.

The processor accelerates the motor acting on the wheel having the lower rotational speed.

According to a preferred embodiment, the first motor provides high energy efficiency at high speeds. Likewise, the second motor provides high energy efficiency at low speeds.

According to a preferred embodiment, the first motor has greater than 75% energy efficiency in a range of linear speed of the front wheel of 17-25 km/h, whereas the second motor has greater than 75% energy efficiency up to a linear speed of the rear wheel not greater than 17 km/h.

The second motor works at 200-250 W in the range of speed of 0-17 km/h, i.e., it is efficient at low speeds.

The first motor works at 100-150 W in the range of speed of 17-25 km/h, i.e., it has a smaller size for weight reasons, and is efficient at high speeds.

The software allows continuously monitoring rotation of both wheels to prevent sliding.

In view of the graph of Figure 1, the efficiency curve of a rear motor today is known to be that which follows, where the shaded area on the left is the area covered by the front motor and the shaded area on the right must be the area covered by the rear motor. Greater than 75% energy efficiency is therefore envisaged in the entire range of speed of assistance allowed by current laws, from 0 to 25 km/h.

On the other hand, to prevent an abrupt change in the driving sensations when one motor or the other is used (for example, when switching entirely from the rear motor to the front motor), an overlap area (15-20 km/h) is proposed in which both motors will work in a combined manner.

For the all-wheel drive system, the management software of the motors allows taking a continuous reading of the rotational speeds of both motors on the condition that both wheels have the same perimeter. In the case of wheels having a different standard or diameter, a simple protocol is established for synchronization between the front and rear motors in a straight area without the possibility of sliding, such that the system assumes which are the equivalent rotational speeds.

The algorithm is very simple, in which the processor or controller is continuously taking a reading of the rpm of each motor (for example, 100 readings per second).

In the event that the difference is lower than a certain level, the processor does not send any order to the motors.

In the event that the difference between both is higher than a certain level (for example, higher than 5%), the processor sends a signal to the slower motor for it to accelerate. Therefore, according to the level of difference between both motors, the consumption intensity of the motor can be proportional, for example:

| Difference | Consumption intensity of the slower motor |
|---|---|
| < 5% | 0 |
| 5-7.5% | 3 A |
| 7.5-10% | 5 A |
| 10-15% | 10 A |
| 10-20% | 15 A |
| > 20% | 20 A |

In view of this description and set of drawings, the person skilled in the art will be able to understand that the embodiments of the invention that have been described can be combined in many ways within the object of the invention. The invention has been described according to some preferred embodiments thereof, but for the person skilled in the art it will be evident that a number of variations can be introduced in said preferred embodiments without exceeding the object of the claimed invention.

## Claims

1. Pedal-assist bike comprising a front wheel and a rear wheel, **characterized in that** it comprises an all-wheel drive system in turn comprising:
- a first electric motor acting on the front wheel,
- a second electric motor acting on the rear wheel, and
- a processor configured for independently controlling said motors in the event that the rotational speed of the wheels is different, the motors acting to equalize the rotational speed of the front and rear wheels.

2. Bike according to claim 1, wherein the processor accelerates the motor acting on the wheel having the lower rotational speed.

3. Bike according to any of the preceding claims, wherein the first motor provides high energy efficiency at high speeds.

4. Bike according to any of the preceding claims, wherein the second motor provides high energy efficiency at low speeds.

5. Bike according to any of claims 1 and 2, wherein the first motor provides high energy efficiency at low speeds whereas the second motor provides high energy efficiency at high speeds.

6. Bike according to claim 1, wherein the first motor has greater than 75% energy efficiency in a range of linear speed of the front wheel of 17-25 km/h, whereas the second motor has greater than 75% energy efficiency up to a linear speed of the rear wheel not greater than 17 km/h.

7. Bike according to any of the preceding claims, wherein the second motor works at 200-250 W in the range of speed of 0-17 km/h.

8. Bike according to any of the preceding claims, wherein the first motor works at 100-150 W in the range of speed of 17-25 km/h.

9. Bike according to any of the preceding claims, wherein an overlap area has been envisaged in which both motors work in a combined manner.

10. Bike according to claim 9, wherein the overlap area in which both motors work in a combined manner is comprised in the range of 15-20 km/h.
